# EUROPEAN PATENT APPLICATION

(11) **EP 3 958 390 A1**
(43) Date of publication of application: **23.02.2022**
(21) Application number: 20831904.6
(22) Date of filing: 26.06.2020
(51) Int. Cl.: H01M 50/528

(54) **CYLINDRICAL SECONDARY BATTERY COMPRISING POSITIVE ELECTRODE TAB FIXING MEMBER**

(30) Priority: 28.06.2019 KR 20190077738
(71) Applicant: LG ENERGY SOLUTION, LTD., Seoul 07335 (KR)
(72) Inventor: DO, Jin Uk, Daejeon 34122 (KR)
(74) Representative: Plasseraud IP
(86) International application number: PCT/KR2020/008409
(87) International publication number: WO 2020/263039

(57) **Abstract**

Disclosed is a cylindrical secondary battery including an electrode assembly having a structure in which a positive electrode sheet and a negative electrode sheet are wound in the state in which a separator is interposed therebetween, a cylindrical can configured to receive the electrode assembly, and a cap assembly mounted to an open upper end of the cylindrical can, wherein the cap assembly includes a top cap located at the upper part thereof, the top cap having a protruding structure, a venting member located at the lower part of the top cap while wrapping the outer circumferential edge of the top cap, the venting member being concave downwards, and a gasket configured to hermetically seal the cylindrical can, a positive electrode tab of the electrode assembly is directly coupled to the lower surface of the venting member, and the cylindrical secondary battery further comprises an insulative fixing member configured to fix the position of the positive electrode tab.

## Description

### [Technical Field]

This application claims the benefit of priority to Korean Patent Application No. 2019-0077738 filed on June 28, 2019, the disclosure of which is hereby incorporated by reference herein its entirety.

The present invention relates to a cylindrical secondary battery including a positive electrode tab fixing member, and more particularly to a cylindrical secondary battery configured such that a current interrupt device is omitted from a cap assembly, a positive electrode tab is directly coupled to a venting member, and a fixing member configured to fix the positive electrode tab is included.

### [Background Art]

Based on the shape of a battery case, lithium secondary batteries are classified into a cylindrical secondary battery having an electrode assembly mounted in a cylindrical metal can, a prismatic secondary battery having an electrode assembly mounted in a prismatic metal can, and a pouch-shaped secondary battery having an electrode assembly mounted in a pouch-shaped case made of an aluminum laminate sheet. Among these batteries, the cylindrical secondary battery has advantages in that the capacity of the cylindrical secondary battery is relatively large and in that the cylindrical secondary battery is structurally stable.

The cylindrical secondary battery is configured such that a cap assembly is located at the upper end of a cylindrical case, which is open, and the cylindrical secondary battery is hermetically sealed in the state in which a gasket is interposed between the cylindrical case and the cap assembly. The gasket also has a function of securing insulation between the cap assembly, which is connected to a positive electrode tab of the electrode assembly, and the cylindrical case, which is connected to a negative electrode tab of the electrode assembly.

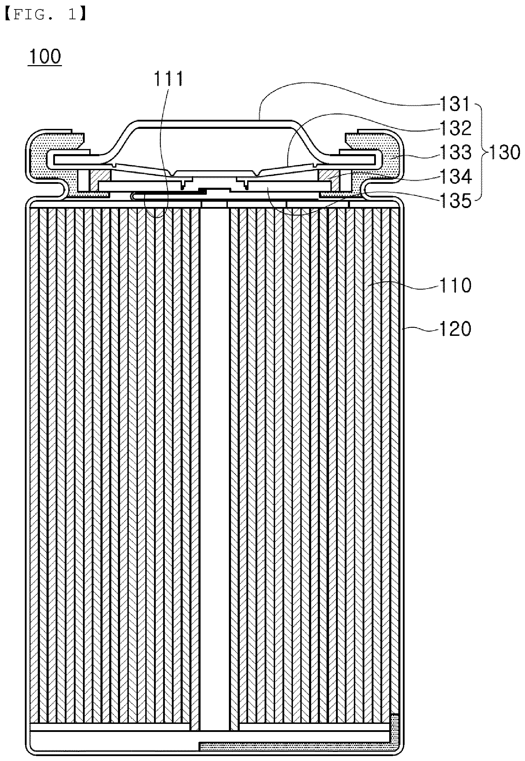

FIG. 1 is a vertical sectional view of a general cylindrical secondary battery. Referring to FIG. 1, the cylindrical secondary battery 100 is configured such that an electrode assembly 110 is received in a cylindrical can 120, a cap assembly 130 is located at the upper part of the cylindrical can 120, and the cylindrical secondary battery 100 is hermetically sealed by a crimping gasket 133.

The cap assembly 130 includes a venting member 132 located at the lower part of a top cap 131 in the state of surrounding the outer circumference of the top cap and a current interrupt device 135 located under the venting member 123 in the state of being in contact with the central part of the venting member 132. A lower gasket 134, configured to prevent the venting member 132 and the current interrupt device 135 from contacting each other at parts other than the central part of the venting member, is located at the outer circumferential edge of the current interrupt device 135.

A positive electrode tab 111 of the electrode assembly 110 is attached to the lower surface of the current interrupt device 135 such that the cap assembly 130 functions as a positive electrode terminal.

As described above, the cap assembly of the cylindrical secondary battery includes the top cap, the venting member, the crimping gasket, the current interrupt device, and the lower gasket, wherein pressure at which short circuit occurs in the secondary battery due to deformation of the current interrupt device is reduced.

Also, in the case in which the overall height of the cap assembly is reduced while the components of the cap assembly remain the same, the space in which the venting member is deformed is insufficient, whereby the venting member is gently deformed. As a result, it is difficult to specify the point in time when a short circuit occurs. Furthermore, a gas discharge path is narrowed, which acts as an obstacle to gas discharge.

In connection therewith, Patent Document 1 relates to a cap assembly configured to have a structure in which a positive electrode tab of an electrode assembly and a safety vent are welded to each other, the welded portion between the safety vent and the positive electrode tab is broken when internal pressure increases due to generation of gas, whereby a short circuit occurs, and the positive electrode tab is fixed by a gasket.

In Patent Document 1, the positive electrode tab is fixed to the safety vent, whereby structural simplification is achieved. However, the positive electrode tab must be attached so as to cross the central part of the gasket such that the positive electrode tab is fixed by the gasket, and the gasket is used in a deformed shape.

Patent Document 2 relates to a secondary battery configured such that an electrode tab electrically connects an electrode assembly and a cap assembly to each other, the electrode tab being provided with a notch and being attached to the lower part of a safety vent, wherein the notch is cut when current equal to or higher than reference current flows.

Patent Document 3 relates to a secondary battery assembly configured such that a mesh-shaped metal grid having high electrical conductivity is located at the upper side of an electrode assembly, wherein the secondary battery assembly includes a positive electrode grid configured to contact a positive electrode and a conductive positive electrode current collection plate configured to support the positive electrode grid. The number of contact points between the electrode and a current collector increases, whereby contact resistance may be reduced.

Each of Patent Document 2 and Patent Document 3 is capable of providing a battery cell having improved safety but does not propose a method of increasing the capacity of the battery cell even when the structure of the battery cell is changed.

Therefore, there is a high necessity for a cylindrical secondary battery configured to have a structure in which a short circuit stably occurs while the overall height of a cap assembly is reduced, whereby the capacity of the battery is increased.

### (Prior Art Documents)

(Patent Document 1) Korean Patent Application Publication No. 2018-0005455 (2018.01.16)
(Patent Document 2) Korean Patent Application Publication No. 2014-0082270 (2014.07.02)
(Patent Document 3) Korean Patent Application Publication No. 2000-0026860 (2000.05.15)

### [Disclosure]

### [Technical Problem]

The present invention has been made in view of the above problems, and it is an object of the present invention to provide a cylindrical secondary battery having a stable structure in which construction of a cap assembly is simplified, whereby the capacity of the battery is increased, and a venting member is easily separated from a positive electrode tab when internal pressure of the secondary battery increases due to gas generated in the secondary battery, whereby gas discharge is easily achieved.

### [Technical Solution]

In order to accomplish the above object, a cylindrical secondary battery according to the present invention includes an electrode assembly having a structure in which a positive electrode sheet and a negative electrode sheet are wound in the state in which a separator is interposed therebetween, a cylindrical can configured to receive the electrode assembly, and a cap assembly mounted to an open upper end of the cylindrical can, wherein the cap assembly includes a top cap located at the upper part thereof, the top cap having a protruding structure, a venting member located at the lower part of the top cap while wrapping the outer circumferential edge of the top cap, the venting member being concave downwards, and a gasket configured to hermetically seal the cylindrical can, a positive electrode tab of the electrode assembly is directly coupled to the lower surface of the venting member, and the cylindrical secondary battery further includes an insulative fixing member configured to fix the position of the positive electrode tab.

The positive electrode tab may include a positive electrode tab body and a coupling portion bent from one end of the positive electrode tab body, the coupling portion being coupled to the lower surface of the venting member, and the fixing member may be interposed between the positive electrode tab body and the coupling portion.

The fixing member may be adhered to the coupling portion at the surface of the fixing member that faces the coupling portion.

The force of coupling between the fixing member and the coupling portion may be higher than the force of coupling between the coupling portion and the venting member.

The fixing member may be located at the lower part of the gasket.

The fixing member may be coupled to the gasket by engagement therewith.

The fixing member may be formed in a fan shape or a bar shape when viewed in a plan view.

The fixing member may be integrally coupled to an upper insulation plate located between the electrode assembly and the cap assembly.

The fixing member may extend upwards from an outer circumferential part of the upper insulation plate, may be bent toward the central part of the upper insulation plate, and may be disposed parallel to the upper insulation plate.

The present invention provides a method of manufacturing a cylindrical secondary battery according to an embodiment, the method including receiving an electrode assembly, having a structure in which a positive electrode sheet and a negative electrode sheet are wound in the state in which a separator is interposed therebetween, in a cylindrical can, locating an upper insulation plate at the upper part of the electrode assembly, forming a beading portion, coupling a positive electrode tab of the electrode assembly to the lower surface of a venting member constituting a cap assembly, coupling a fixing member to a gasket constituting the cap assembly, and coupling the cap assembly to the cylindrical can and crimping the cylindrical can.

The step of coupling the fixing member to the gasket may include coupling a coupling portion of the positive electrode tab and the fixing member to each other.

The present invention also provides a method of manufacturing a cylindrical secondary battery according to another embodiment, the method including receiving an electrode assembly, having a structure in which a positive electrode sheet and a negative electrode sheet are wound in the state in which a separator is interposed therebetween, in a cylindrical can, locating an upper insulation plate at the upper part of the electrode assembly, forming a beading portion, coupling a positive electrode tab of the electrode assembly to the lower surface of a venting member constituting a cap assembly, fixing the positive electrode tab to a fixing member integrally coupled to the upper insulation plate, and coupling the cap assembly to the cylindrical can and crimping the cylindrical can.

The step of fixing the positive electrode tab may include extending the positive electrode tab over the lower surface of the fixing member, bending the positive electrode tab, and attaching the positive electrode tab to the upper surface of the fixing member.

### [Description of Drawings]

FIG. 1 is a vertical sectional view of a conventional general cylindrical secondary battery.
FIG. 2 is a vertical sectional view of a cylindrical secondary battery according to an embodiment.
FIG. 3 is enlarged views of the upper parts of FIGS. 1 and 2.
FIG. 4 is a view showing a portion of a process of manufacturing the cylindrical secondary battery.
FIG. 5 is a view showing the state in which a fixing member is coupled to the cylindrical secondary battery of FIG. 4.
FIG. 6 is a perspective view of a fixing member according to an embodiment.
FIG. 7 is a perspective view of an upper insulation plate to which a fixing member according to an embodiment is coupled.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Embodiments of the present invention will be described in detail with reference to the accompanying drawings.

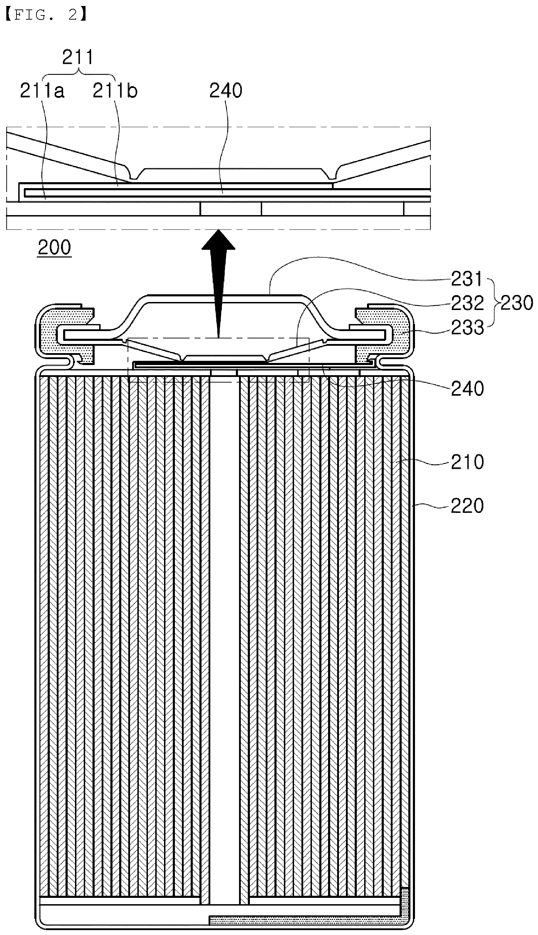

FIG. 2 is a vertical sectional view of a cylindrical secondary battery according to an embodiment.

Referring to FIG. 2, the cylindrical secondary battery 200 is configured such that an electrode assembly 210 is received in a cylindrical can 220, a cap assembly 230 is located at the upper part of the cylindrical can 220, and the cylindrical secondary battery 200 is hermetically sealed by a gasket 233.

The cap assembly 230 includes a top cap 231 having an upwardly protruding central part, a venting member 232 located at the lower part of the top cap 231 while wrapping the outer circumferential edge of the top cap 231, the venting member 232 being concave downwards, and a gasket 233 configured to hermetically seal the secondary battery in the state of being in contact with the cylindrical can 220.

That is, the cap assembly 230 according to the present invention does not include a current interrupt device and a gasket added to the outer circumferential edge of the current interrupt device, which are included in a cap assembly applied to a conventional cylindrical secondary battery.

In the cylindrical secondary battery 200 according to the present invention, therefore, a positive electrode tab 211 is directly coupled to the lower surface of the venting member 232.

However, in the case in which the venting member is deformed in an inverted shape due to an increase in internal pressure of the cylindrical secondary battery, the venting member must be separated from the positive electrode tab such that a short circuit occurs. To this end, a fixing member 240 configured to fix the position of the positive electrode tab 211 is added.

Specifically, the lower end of the positive electrode tab is attached to the electrode assembly, and the upper end of the positive electrode tab is coupled to the lower surface of the venting member. The positive electrode tab may include a positive electrode tab body 211a and a coupling portion 211b coupled to the lower surface of the venting member.

The coupling portion 211b is a portion that is bent from the upper end of the positive electrode tab body 211a and then extends. The coupling portion 211b and the positive electrode tab body 211a are located so as to face each other, and the fixing member 240 is located between the coupling portion 211b and the positive electrode tab body 211a. When the venting member 232 is separated from the positive electrode tab, therefore, the positive electrode tab is fixed in position such that the positive electrode tab does not move.

Separation of the positive electrode tab body 211a may be prevented by the fixing member 240. In order to prevent the coupling portion 211b, which is coupled to the venting member 232, from moving upwards together with the venting member 232, however, the fixing member 240 and the coupling portion 211b may be adhered to each other at the surfaces thereof that face each other.

That is, the upper surface of the coupling portion 211b is coupled to the venting member 232, and the lower surface of the coupling portion 211b is coupled to the fixing member 240. When the venting member 232 is deformed and separated from the coupling portion 211b, however, coupling between the coupling portion 211b and the fixing member 240 must be maintained. Therefore, it is preferable that the force of coupling between the coupling portion 211b and the fixing member 240 be higher than the force of coupling between the coupling portion 211b and the venting member 232.

Since some of the members constituting the conventional cap assembly are omitted, as described above, the overall height of the cap assembly is reduced. When comparing the capacities of battery cells in cylindrical secondary batteries having the same length, therefore, the cylindrical secondary battery according to the present invention is capable of securing a large electrode assembly reception space, whereby it is possible to provide a high-capacity secondary battery.

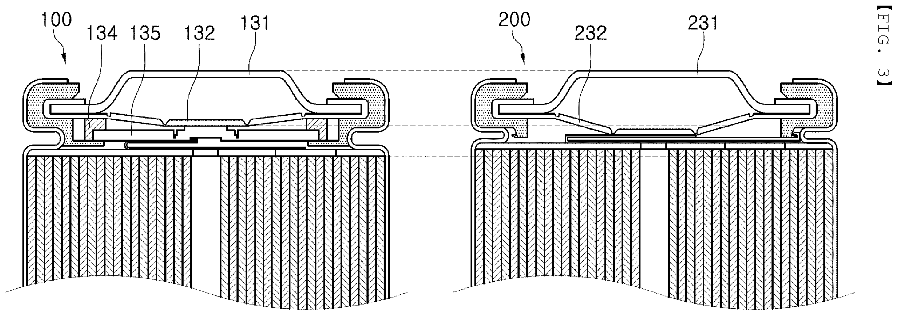

In connection therewith, FIG. 3 is enlarged views of the upper parts of FIGS. 1 and 2.

Referring to FIG. 3, the upper part of the cylindrical secondary battery 100 of FIG. 1 and the upper part of the cylindrical secondary battery 200 of FIG. 2 are shown side by side, from which it is possible to compare the components of the cap assemblies and the overall heights of the cap assemblies and to confirm a change in size of a space in which the venting member is deformed.

Specifically, the cylindrical secondary battery 200 according to the present invention has a structure in which the lower gasket 134 and the current interrupt device 135 are omitted from the conventional cylindrical secondary battery 100.

In addition, the distance between the top cap 231 and the venting member 232 of the cylindrical secondary battery 200 according to the present invention is greater than the distance between the top cap 131 and the venting member 132 of the conventional cylindrical secondary battery 100.

Conventionally, the overall height of the cap assembly is reduced in order to increase the capacity of the battery cell, whereby the distance between the top cap and the venting member is designed to be short. As a result, the venting member is gently deformed, even though a short circuit due to abrupt deformation of the venting member is needed when the internal pressure of the battery cell increases, whereby it is difficult to specify the point in time when short circuit occurs.

In the present invention, the distance between the top cap and the venting member is designed to increase, as shown in FIG. 3, whereby it is possible to solve the above problem.

Also, in the cylindrical secondary battery 200 according to the present invention, the overall height of the cap assembly is reduced compared to the conventional cylindrical secondary battery 100, whereby it is possible to achieve the object of the present invention for manufacturing a high-capacity secondary battery.

A method of manufacturing the cylindrical secondary battery 200 according to the present invention may include a step of receiving an electrode assembly, having a structure in which a positive electrode sheet and a negative electrode sheet are wound in the state in which a separator is interposed therebetween, in a cylindrical can, a step of locating an upper insulation plate at the upper part of the electrode assembly, a step of forming a beading portion, a step of coupling a positive electrode tab of the electrode assembly to the lower surface of a venting member constituting a cap assembly, a step of coupling a fixing member to a gasket constituting the cap assembly, and a step of coupling the cap assembly to the cylindrical can and crimping the cylindrical can.

In addition, the step of coupling the fixing member to the gasket may include a step of coupling a coupling portion of the positive electrode tab and the fixing member to each other.

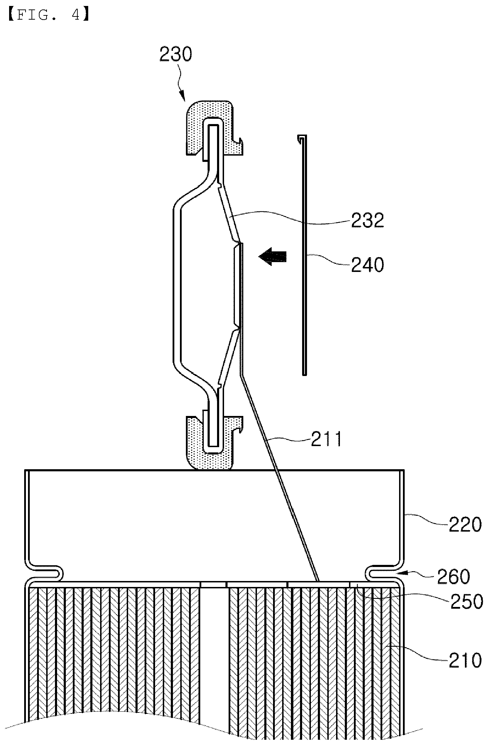

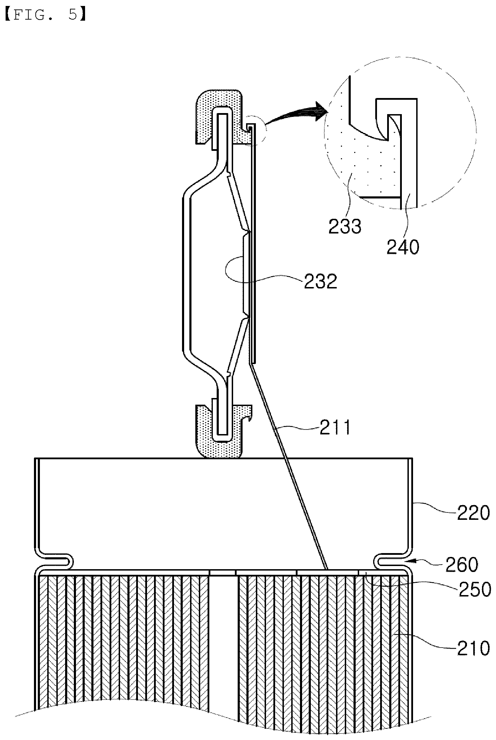

In connection therewith, FIG. 4 is a view showing a portion of a process of manufacturing the cylindrical secondary battery, and FIG. 5 is a view showing the state in which the fixing member is coupled to the cylindrical secondary battery of FIG. 4.

Referring to FIGS. 4 and 5, the electrode assembly 210 is received in the cylindrical can 220, an upper insulation plate 250 is located at the upper part of the electrode assembly, and a beading portion 260 is formed at the upper part of the upper insulation plate 250.

The positive electrode tab 211 attached to the electrode assembly 210 is attached to the lower surface of the venting member 232 in the state in which the cap assembly 230 is assembled. One surface of the positive electrode tab 211 is coupled to the venting member 232, and the other surface of the positive electrode tab 211 is coupled to the fixing member 240. The cap assembly 230 is coupled to the upper part of the cylindrical can 220 in the state of being coupled with the positive electrode tab 211 and the fixing member 240, and the cylindrical can 220 is crimped.

The fixing member 240 may be located at the lower part of the gasket 233, and one end of the fixing member 240 overlapping the gasket 233 may be coupled to the gasket 233 by engagement therewith.

In a concrete example, the fixing member 240 may be formed in a fan shape or a bar shape when viewed in a plan view.

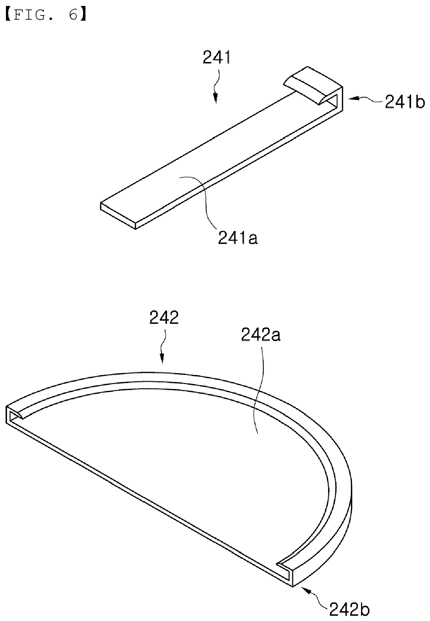

In connection therewith, FIG. 6 is a perspective view of a fixing member according to an embodiment.

Referring to FIG. 6, a fixing member 241 is formed in a bar shape when viewed in a plan view, and includes a rectangular base portion 241a configured to fix the positive electrode tab and an engagement portion 241b configured to be coupled to the gasket by engagement therewith. In the case in which such a small fixing member 241 is used, it is possible to minimize an increase in weight of the cylindrical secondary battery due to addition of the fixing member.

Meanwhile, a fixing member 242 is formed in a fan shape, such as a semicircular shape, when viewed in a plan view, and includes a semicircular base portion 242a configured to fix the positive electrode tab and an engagement portion 242b configured to be coupled to the gasket by engagement therewith. In the case in which a fixing member including a large base portion, such as the fixing member 242, is used, there is little limitation in setting the position of the fixing member based on the extension position of the positive electrode tab, and even in the case in which a plurality of positive electrode tabs is included, it is possible to stably fix the positive electrode tabs.

Additionally, the shape in which the fixing member is integrally added to the conventional battery cell components may be further proposed. For example, the fixing member may be integrally coupled to an upper insulation plate located between the electrode assembly and the cap assembly. Specifically, the fixing member may extend upwards from the outer circumferential part of the upper insulation plate, may be bent toward the central part of the upper insulation plate, and may be disposed parallel to the upper insulation plate.

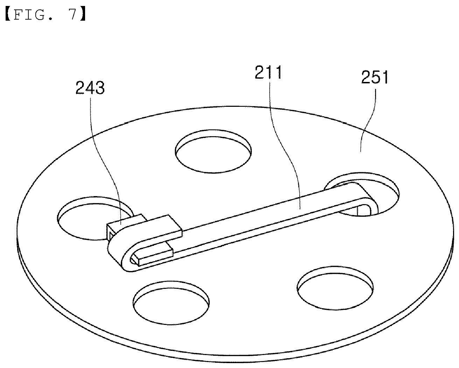

In connection therewith, FIG. 7 is a perspective view of an upper insulation plate to which a fixing member according to an embodiment is coupled.

Referring to FIG. 7, a fixing member 243 integrally coupled to an upper insulation plate 251 is added to the outer circumferential part of the upper surface of the upper insulation plate 251. The fixing member 243 extends perpendicularly upwards from the plane of the upper insulation plate 251, is bent 90 degrees, and is located so as to be parallel to the upper insulation plate.

The upper insulation plate 251 is provided with a plurality of through-holes, through one of which the positive electrode tab 211 attached to the electrode assembly so as to extend upwards therefrom extends. After extending through one of the through-holes, the positive electrode tab 211 extends over the overlapping portion between the fixing member 243 and the upper insulation plate 251, is bent 180 degrees, and is coupled to the upper surface of the fixing member 243.

However, the positive electrode tab 211 may be located between the fixing member and the upper insulation plate in the state of being coupled to the lower surface of the venting member. A method of manufacturing a cylindrical secondary battery in the case in which the fixing member 243 is used may include a step of receiving an electrode assembly, having a structure in which a positive electrode sheet and a negative electrode sheet are wound in the state in which a separator is interposed therebetween, in a cylindrical can, a step of locating an upper insulation plate at the upper part of the electrode assembly, a step of forming a beading portion, a step of coupling a positive electrode tab of the electrode assembly to the lower surface of a venting member constituting a cap assembly, a step of fixing the positive electrode tab to a fixing member integrally coupled to the upper insulation plate, and a step of coupling the cap assembly to the cylindrical can and crimping the cylindrical can.

In the present invention, as described above, the fixing member is included such that the positive electrode tab is completely separated from the venting member when the venting member is deformed, whereby a short circuit occurs, a larger space in which the venting member can be deformed is secured such that the short circuit can stably occur, and the overall height of the cap assembly is reduced, whereby it is possible to provide a high-capacity secondary battery.

A person having ordinary skill in the art to which the present invention pertains will appreciate that various applications and modifications are possible based on the above description without departing from the scope of the present invention.

### (Description of Reference Symbols)

- 100, 200:: Cylindrical secondary batteries
- 110, 210:: Electrode assemblies
- 111, 211:: Positive electrode tabs
- 120, 220:: Cylindrical cans
- 130, 230:: Cap assemblies
- 131, 231:: Top caps
- 132, 232:: Venting members
- 133:: Crimping gasket
- 134:: Lower gasket
- 135:: Current interrupt device
- 211a:: Positive electrode tab body
- 211b:: Coupling portion
- 233:: Gasket
- 240, 241, 242, 243:: Fixing members
- 241a, 242a:: Base portions
- 241b, 242b:: Engagement portions
- 250, 251:: Upper insulation plates
- 260:: Beading portion

### [Industrial Applicability]

As is apparent from the above description, a cylindrical secondary battery according to the present invention includes a cap assembly, from which a current interrupt device and a gasket added to the outer circumferential edge of the current interrupt device are omitted, wherein the overall height of the cap assembly is reduced, whereby a larger space occupied by an electrode assembly is secured, and therefore it is possible to provide a secondary battery having increased capacity.

In addition, it is possible to stably fix a positive electrode tab attached to a venting member using a fixing member, whereby the venting member is separated from the fixed positive electrode tab when the venting member is deformed due to an increase in internal pressure of the secondary battery, and therefore it is possible to interrupt the flow of current.

## Claims

1. A cylindrical secondary battery comprising:
an electrode assembly comprising a positive electrode sheet, a negative electrode sheet, and a separator interposed between the positive electrode sheet and the negative electrode sheet, the positive electrode sheet, the negative electrode sheet, and the separator being wound;
a cylindrical can configured to receive the electrode assembly; and
a cap assembly mounted to an open upper end of the cylindrical can, wherein
the cap assembly comprises a top cap located at an upper part thereof, the top cap having a protruding structure, a venting member located at a lower part of the top cap while wrapping an outer circumferential edge of the top cap, the venting member being concave downwards, and a gasket configured to hermetically seal the cylindrical can,
a positive electrode tab of the electrode assembly is directly coupled to a lower surface of the venting member, and
the cylindrical secondary battery further comprises an insulative fixing member configured to fix a position of the positive electrode tab.

2. The cylindrical secondary battery according to claim 1, wherein
the positive electrode tab comprises a positive electrode tab body and a coupling portion bent from one end of the positive electrode tab body, the coupling portion being coupled to the lower surface of the venting member, and
the fixing member is interposed between the positive electrode tab body and the coupling portion.

3. The cylindrical secondary battery according to claim 2, wherein the fixing member is adhered to the coupling portion at a surface of the fixing member that faces the coupling portion.

4. The cylindrical secondary battery according to claim 3, wherein force of coupling between the fixing member and the coupling portion is higher than force of coupling between the coupling portion and the venting member.

5. The cylindrical secondary battery according to claim 1, wherein the fixing member is located at a lower part of the gasket.

6. The cylindrical secondary battery according to claim 5, wherein the fixing member is coupled to the gasket by engagement therewith.

7. The cylindrical secondary battery according to claim 1, wherein the fixing member is formed in a fan shape or a bar shape when viewed in a plan view.

8. The cylindrical secondary battery according to claim 1, wherein the fixing member is integrally coupled to an upper insulation plate located between the electrode assembly and the cap assembly.

9. The cylindrical secondary battery according to claim 8, wherein the fixing member extends upwards from an outer circumferential part of the upper insulation plate, is bent toward a central part of the upper insulation plate, and is disposed parallel to the upper insulation plate.

10. A method of manufacturing the cylindrical secondary battery according to any one of claims 1 to 9, the method comprising:
receiving an electrode assembly in a cylindrical can, the electrode assembly comprising a positive electrode sheet, a negative electrode sheet, and a separator interposed between the positive electrode sheet and the negative electrode sheet, the positive electrode sheet, the negative electrode sheet, and the separator being wound;
locating an upper insulation plate at an upper part of the electrode assembly;
forming a beading portion;
coupling a positive electrode tab of the electrode assembly to a lower surface of a venting member constituting a cap assembly;
coupling a fixing member to a gasket constituting the cap assembly; and
coupling the cap assembly to the cylindrical can and crimping the cylindrical can.

11. The method according to claim 10, wherein the step of coupling the fixing member to the gasket comprises coupling a coupling portion of the positive electrode tab and the fixing member to each other.

12. A method of manufacturing the cylindrical secondary battery according to any one of claims 1 to 9, the method comprising:
receiving an electrode assembly in a cylindrical can, the electrode assembly comprising a positive electrode sheet, a negative electrode sheet, and a separator interposed between the positive electrode sheet and the negative electrode sheet, the positive electrode sheet, the negative electrode sheet, and the separator being wound;
locating an upper insulation plate at an upper part of the electrode assembly;
forming a beading portion;
coupling a positive electrode tab of the electrode assembly to a lower surface of a venting member constituting a cap assembly;
fixing the positive electrode tab to a fixing member integrally coupled to the upper insulation plate; and
coupling the cap assembly to the cylindrical can and crimping the cylindrical can.

13. The method according to claim 12, wherein the step of fixing the positive electrode tab comprises extending the positive electrode tab over a lower surface of the fixing member, bending the positive electrode tab, and attaching the positive electrode tab to an upper surface of the fixing member.
